# EUROPÄISCHE PATENTSCHRIFT

(11) **EP 1 632 380 B1**
(45) Veröffentlichungstag und Bekanntmachung des Hinweises auf die Patenterteilung: **01.07.2009**
(21) Anmeldenummer: 05016822.8
(22) Anmeldetag: 03.08.2005
(51) Int. Cl.: B60K 15/04, B29C 45/16, B60H 1/00

(54) **Bauteil mit rohrförmigem Abschnitt**
Part with tubular section
Pièce avec section tubulaire

(30) Priorität: 04.09.2004 DE 102004042847
(43) Veröffentlichungstag der Anmeldung: 08.03.2006
(73) Patentinhaber: NORMA Germany GmbH, 63277 Maintal (DE)
(72) Erfinder: Kertesz, Janos, 65719 Hofheim (DE)
(74) Vertreter: Knoblauch, Andreas

(56) Entgegenhaltungen:
- EP-A- 1 396 326
- DE-A1- 10 048 973
- DE-C1- 19 617 349
- DE-U1- 20 022 716
- JP-A- 51 121 070
- JP-A- 2003 300 542
- MOERWALD K: "EINBLICK IN DIE KONSTRUKTION VON SPRITZGUSSWERKZEUGEN" KUNSTSTOFF RUNDSCHAU, VERLAG FUR PUBLIZITAET. ISERNHAGEN HB/HANNOVER, DE, Nr. 1, Januar 1962 (1962-01), Seiten 8-14, XP009050568
- "ARTIKELGESTALUNG UND WERKZEUGKONSTRUKTION BEI DER SPRITZGUSSVERARBEITUNG VON NIEDERDRUCK-POLYAETHYLEN UND POLYPROPYLEN" PLASTVERARBEITER, ZEHNER AND HUETHIG VERLAG, SPEYER AM RHEIN, DE, Bd. 12, Nr. 10, Oktober 1961 (1961-10), Seiten 453-458,504, XP001173327 ISSN: 0032-1338

## Beschreibung

Die Erfindung bezieht sich auf ein Bauteil mit rohrförmigem Abschnitt, insbesondere Fluidleitungs-Bauteil, das wenigstens zwei Materialien mit unterschiedlicher Steifigkeit und/oder Kriechfestigkeit aufweist, wobei die Materialien thermoplastische Kunststoffe aufweisen und das steifere und/oder kriechfestere Material in dem anderen Material eingebettet ist.

Aus der DE 42 39 909 ist es bekannt, ein Fluidleitungs-Bauteil in Form eines Rohrstutzens, an den eine flexible Fluidleitung angeschlossen wird, in zwei Teile zu unterteilen, die thermoplastischen Kunststoff aufweisen, wobei der eine Teil eine geringere Kriechneigung als der andere hat und um den anderen herumgespritzt ist. Außerdem weist der eine Teil verstärkten und der andere unverstärkten Kunststoff auf. Insbesondere weist der unverstärkte Kunststoff hochdichtes Polyethylen (HDPE) und der verstärkte Kunststoff Polyamid (PA) auf. Wenn die Verstärkung aus Glasfasern besteht, tritt an der Grenzfläche beider Teile, dort, wo Glasfasern in der Grenzfläche liegen, keine Schweißverbindung zwischen den Kunststoffen auf. Unter Umständen kann die Verbindung dann undicht werden oder sich lösen. Außerdem enthält der gesamte Kunststoff des einen Teils eine Verstärkung, obwohl sie nur in dem - z.B. durch eine Klemmschelle - druckbelasteten Bereich vorhanden zu sein brauchte.

In DE 100 48 973 A1 wird ein Kunststoff-Fitting sowie ein Verfahren zur dessen Herstellung und eine Vorrichtung zur Herstellung eines Kunststoffkörpers vorgeschlagen. Um das Kunststoff-Fitting kostengünstiger herstellen zu können als bisher, wird dort ein Kunststoff-Fitting mit einem zweikomponentigen Anguss vorgeschlagen.

In EP 1 396 326 A1 ist ein Bauteil zum Verbinden einer Fluidleitung mit einer Öffnung eines Kunststoffbehälters beschrieben. Dort wird vorgeschlagen, ein zweites Material des Bauteils in die noch plastische Seele des ersten Materials des Bauteils einzuspritzen. Dabei kann das erste Material eine Schmelzverbindung zur Verbindung mit anderen Bauteilen eingehen. Das zweite Material kann eine höhere Diffusionssperrfähigkeit gegenüber Kohlenwasserstoffen aufweisen.

Der Erfindung liegt die Aufgabe zugrunde, ein Fluidleitungs-Bauteil der geschilderten Art anzugeben, bei dem die Verbindung der Kunststoffe fester und dichter ist und, soweit Versteifungsmaterial erforderlich ist, man mit weniger Versteifungsmaterial auskommt.

Erfindungsgemäß ist diese Aufgabe dadurch gelöst, daß ein zwischen 40 % und weniger als 100 % liegender Teil der Ringfläche aus dem eingespritzten Material besteht und in gleichmäßigen Abständen in Umfangsrichtung der Ringfläche verteilt ist.

Eine kontinuierlich umlaufende Einspritz-Ringfläche hat gegenüber einer nahezu punktförmigen Einspritzstelle den Vorteil, daß das eingespritzte Material gleichmäßig über dem gesamten Umfangsbereich des rohrförmigen Abschnitts verteilt und auch gleichmäßig weit, ohne eine Welligkeit am vorderen, inneren Ende, eingespritzt wird. Annähernd das gleiche, bis auf eine geringfügige Welligkeit am vorderen Ende, wird durch die Ausgestaltung nach Anspruch 1 erreicht, daß ein zwischen 40 % und weniger als 100 % liegender Teil der Ringfläche aus dem eingespritzten Material besteht und in gleichmäßigen Abständen in Umfangsrichtung der Ringfläche verteilt ist. Hierbei ergibt sich zwar eine geringfügige Welligkeit am inneren Ende des eingespritzten Materials, jedoch ist etwas weniger inneres Material in der Ringfläche und in einem beim Einspritzen entstehenden Angußteil erforderlich, was insbesondere dann von Vorteil ist, wenn das innere Material aus kostspieligerem Material, z.B. Polyamid, als das äußere Material, z.B. Polyethylen, besteht. Ferner kann bei dieser Lösung durch entsprechende Wahl des Mengenverhältnisses der beiden Materialien die Gesamtsteifigkeit, Kriechfestigkeit und/oder Impermeabilität des rohrförmigen Abschnitts gegenüber ein Hindurchdiffundieren von Kohlenwasserstoffen, wie Kraftfahrzeug-Kraftstoff, Öl oder alkoholhaltiges Kühlwasser, örtlich unterschiedlich oder so eingestellt werden, daß die unerwünschten Eigenschaften beider Materialien minimiert sind. Wenn z.B. eine Schelle zum Festklemmen einer flexiblen Fluidleitung, z.B. eines Schlauches, auf dem Fluidleitungs-Bauteil benutzt werden soll, dann braucht nur der durch die Schelle druckbelastete Bereich durch Einspritzen eines höher belastbaren oder verstärkten Kunststoffs in den entsprechenden Bereich der noch plastischen Seele des äußeren Materials (Kunststoffs) verstärkt zu werden. Prinzipiell können die Eigenschaften des Fluidleitungs-Bauteils durch unterschiedliche Positionierung der Ringfläche örtlich unterschiedlich gewählt werden. Wenn z.B. nur ein bestimmter Bereich des Fluidleitungs-Bauteils gegenüber Kohlenwasserstoffen impermeabel zu sein braucht, kann ein weitgehend impermeabler Kunststoff in diesen Bereich des äußeren Kunststoffs eingespritzt werden.

So kann dafür gesorgt sein, daß die Ringfläche durch in den inneren Kunststoff über die Ringfläche nachgespritzten Kunststoff, der dem äußeren Kunststoff gleicht, abgedeckt ist.

Vorzugsweise kann dafür gesorgt sein, daß das Mengenverhältnis des eingebetteten Materials zum äußeren Material im Bereich von 10 % bis 90 % liegt.

Das eingebettete Material kann aus der Gruppe ausgewählt sein, die Polyamid (PA), verstärktes Polyamid, Polyethylen (PE), verstärktes Polyethylen, Polypropylen (PP), verstärktes Polypropylen, Polyethylenterephthalat (PET), Ethylenvinylalkohol (EVOH), Polybutylennaphthalat (PBN), Polyethylennaphthalat (PEN), Polyoximethylen (POM), Polyphenylensulfid (PPS) und Fluorthermoplast aufweist.

Ferner kann das äußere Material aus der Gruppe ausgewählt sein, die Polyolefin, thermoplastisches Elastomer, unverstärktes Polyamid, thermoplastisches Polyester und thermoplastisches Polyesterelastomer aufweist.

Die Erfindung und ihre Weiterbildungen werden nachstehend anhand der beiliegenden Zeichnungen bevorzugter Ausführungsbeispiele näher beschrieben. Darin stellen dar:
- Fig. 1: einen Axialschnitt eines nicht unter den Schutzbereich von Anspruch 1 fallenden Ausführungsbeispiels des erfindungsgemäßen Bauteils, das auf dem Rand einer Öffnung eines Kraftfahrzeugtanks angeschweißt wird,
- Fig. 2: eine Draufsicht eines Angußstücks, das sich bei Verwendung eines entsprechenden Angußwerkzeugs beim Einspritzen eines Kunststoffs in die noch plastische Seele eines äußeren Kunststoffs des Bauteils ergibt, der zuerst gespritzt wurde,
- Fig. 3: eine Seitenansicht des Angußstücks nach Fig. 2,
- Fig. 4: eine Seitenansicht eines Angußstücks nach Anspruch 1 , das sich beim Einspritzen eines Kunststoffs in die noch plastische Seele des äußeren Kunststoffs des Bauteils nach Fig. 1 ergibt,
- Fig. 5: eine Draufsicht des Angußstücks nach Fig. 4,
- Fig. 6: eine Seitenansicht einer Abwandlung des Angußstücks nach den Fig. 4 und 5,
- Fig. 7: eine Draufsicht des Angußstücks nach Fig. 6,
- Fig. 8: einen Axialschnitt eines weiteren Ausführungsbeispiels der Erfindung, bei dem sich das Angußstück nach den Fig. 6 und 7 ergab,
- Fig. 9: einen Axialschnitt eines nicht unter den Schutzbereich von Anspruch 1 fallenden Ausführungsbeispiels ,
- Fig. 10: eine Draufsicht eines Angußstücks, das sich bei Verwendung eines entsprechenden Angußwerkzeugs ergibt, jedoch einen etwas kleineren Durchmesser als das Angußstück nach den Fig. 2 und 3 hat,
- Fig. 11: eine Seitenansicht des Angußstücks nach Fig. 10,
- Fig. 12: einen Axialschnitt eines nicht unter den Schutzbereich von Anspruch 1 fallenden Ausführungsbeispiels ,
- Fig. 13: einen Axialschnitt eines nicht unter den Schutzbereich von Anspruch 1 fallenden Ausführungsbeispiels ,
- Fig. 14: einen Axialschnitt eines nicht unter den Schutzbereich von Anspruch 1 fallenden Ausführungsbeispiels und
- Fig. 15: einen Axialschnitt eines nicht unter den Schutzbereich von Anspruch 1 fallenden Ausführungsbeispiels .

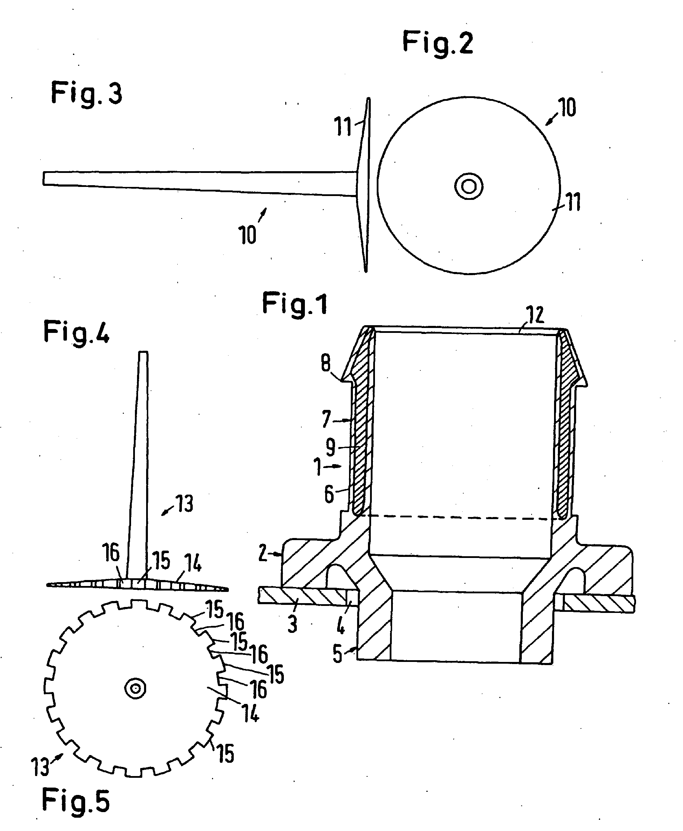

Das Ausführungsbeispiel des Bauteils nach Fig. 1 ist ein Fluidleitungs-Bauteil in Form eines Rohrstutzens mit einem rohrförmigen Abschnitt 1, der einen Flansch 2 aufweist. Der Rohrstutzen dient zum Verbinden einer Fluidleitung in Form eines Schlauches mit einem anderen Bauteil, hier dem Tank 3 eines Kraftfahrzeugs. Von dem Tank 3 ist nur ein Teil seiner Wand mit einer Öffnung 4 dargestellt, durch die ein unterer Endabschnitt 5 des Rohrstutzens mit Spiel hindurchgeführt ist.

Der Tank 3 weist im wesentlichen hochdichtes Polyethylen (HDPE) auf. Dementsprechend weist auch der Rohrstutzen außen ein Material 6 auf, das denselben thermoplastischen Kunststoff aufweist, hier Polyethylen (PE), der mit dem HDPE des Tanks 3 eine Schmelzverbindung eingeht. Der Flansch 2 des Rohrstutzens wird daher im Reibschweißverfahren oder durch Spiegelschweißen mit dem Tank 3 verschweißt.

Über den (in Fig. 1) oberen Endabschnitt 7 des Rohrstutzens wird der Schlauch über eine Halterippe 8 hinweg aufgeschoben und hinter der Halterippe 8 mittels einer spannbaren Schelle, z.B. einer Schneckengewindeschelle, festgeklemmt. Da das äußere Material 6 PE aufweist, ist es allein nicht hinreichend kriechfest. Es könnte daher unter dem Einspanndruck der Schelle so weit nachgeben, daß die Verbindung zwischen Schlauch und Rohrstutzen undicht wird und der Kraftstoff - Benzin oder Dieselöl - in die Umwelt entweicht. Um dies zu verhindern, ist in den Endabschnitt 7 ein zweites thermoplastisches Material 9 eingespritzt worden, das eine höhere Kriechfestigkeit aufweist. Bei vorliegendem Ausführungsbeispiel weist es Polyamid (PA) auf, das auch zusätzlich verstärkt sein kann, z.B. durch Glasfasern. Polyamid hat den weiteren Vorteil, daß es eine hohe Diffusionssperrfähigkeit gegenüber Kohlenwasserstoffen, wie Benzin oder Öl, hat.

Das Material 9 wird am freien Ende des Endabschnitts 7 in das Material 6 eingespritzt, solange dieses nach dem Einspritzen in die Kavität des Formwerkzeugs noch nicht vollständig ausgehärtet ist. Da das Aushärten an den kühleren Außenwänden der Kavität des Formwerkzeugs beginnt, bleibt der innere Teil des Materials 6 zunächst noch plastisch. In diese plastische "Seele" dringt dann das geschmolzene Material 9 beim Einspritzen vom oberen Ende des Endabschnitts 7 her ein, so daß das Material 6 einen festeren Kern erhält und wesentlich dünner als der Kern wird. Je nach Wahl des Verhältnisses der Mengen oder Volumina beider Materialien 6 und 9, kann die Gesamtkriechfestigkeit des Endabschnitts 7, dessen Diffusionssperrfähigkeit gegenüber Kohlenwasserstoffen und auch die Eindringtiefe des Materials 9 in das Material 6 bestimmt werden. So genügt es im vorliegenden Beispiel, das Material 9 nur über den kurzen Endabschnitt 7 einzuspritzen, der durch die Schelle belastet wird, wenn die Diffusionssperrfähigkeit nicht über einen längeren Abschnitt erwünscht oder erforderlich ist. Die Gesamteigenschaft eines gewünschten Teils des Rohrstutzens oder eines anderen Fluidleitungs-Bauteils kann daher gezielt, örtlich begrenzt eingestellt werden, so daß man mit weniger kostspieligem Material 9, wie Polyamid, auskommt. Wenn die im Material 9 gegebenenfalls enthaltenen Glasfasern teilweise an der Oberfläche des Materials 9 liegen, besteht nicht die Gefahr, daß sie durch das Benzin oder Öl ausgewaschen werden, weil das Material 9 nahezu vollständig vom Material 6 umhüllt ist.

Das Angußwerkzeug für das Material 9 ist so geformt, daß nach dem Einspritzen des Materials 9 und dem Öffnen des Angußwerkzeugs ein etwa schirmartiges Angußstück 10 aus dem Material 9, wie es in den Fig. 2 und 3 in Draufsicht bzw. Seitenansicht dargestellt ist, mit dem Umfang einer etwa diskusförmigen Scheibe 11 nach dem Aushärten am oberen Ende des Rohrstutzens oder Endabschnitts 7 angeformt bleibt. Dieses Angußstück 10 wird dann vom Rohrstutzen abgeschnitten, so daß danach am oberen Ende, hier auf der Innenseite des äußeren Materials 6, eine kontinuierlich umlaufende Ringfläche 12 aus dem Material 9 verbleibt, an der erkennbar ist, daß das Material 9 über diese Ringfläche 12 in das Material 6 eingespritzt worden ist.

Bei dieser Ausbildung des Angußstücks 11 erhält das innere (vordere) Ende des eingespritzten Materials 9 eine gleichmäßig umlaufende Form, d.h. das innere Ende ist nicht in Umfangsrichtung gewellt, sondern weitgehend geradlinig begrenzt, wie es durch die gestrichelte Linie in Fig. 1 angedeutet ist.

Erfindungsgemäß ist ein Angußstück 13 ausgebildet , wie es in den Fig. 4 und 5 dargestellt ist. Bei diesem Angußstück 13 ist der Umfang der diskusförmigen Scheibe 14 mit rechteckigen Zähnen 15 versehen, die gleichmäßig über den Umfang der Scheibe 14 verteilt sind und deren Lükken 16 in Umfangsrichtung ebenso breit sind wie die Zähne 15.

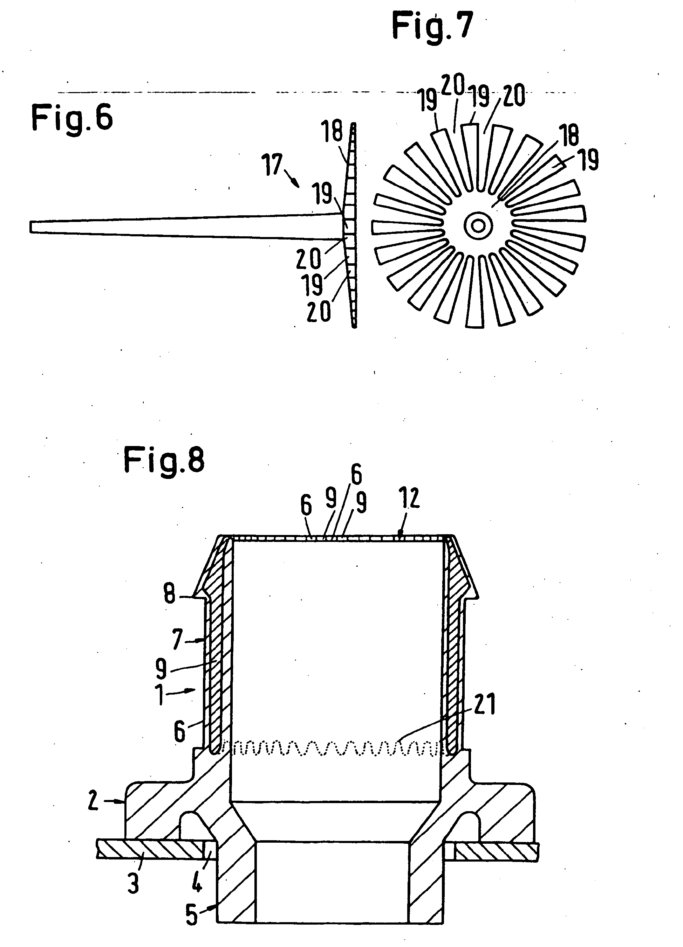

Die Zähne 15 entsprechen Austrittsöffnungen im Angußwerkzeug, über die das Material 9 in die noch plastische Seele des Materials 6 eingespritzt worden ist. Dementsprechend besteht die nach dem Abschneiden der Scheibe 14 im oberen Rand des Rohrstutzens verbleibende Ringfläche 12 aus kleineren Ringflächen-Abschnitten, die abwechselnd aus den Materialien 6 und 9 bestehen und deren Breite jeweils der Breite der Zähne 15 und Lücken 16 der Scheibe 14 entspricht, wie es in Fig. 8 dargestellt ist. Statt einer geraden Begrenzungslinie, wie sie in Fig. 1 gestrichelt dargestellt ist, ergibt sich in diesem Fall eine leicht gewellte Begrenzungslinie 21, wie es in Fig. 8 in Form der punktierten Wellenlinie schematisch dargestellt ist. Aufgrund der Lükken 16 kommt man im Vergleich zu dem Angußstück 10 nach den Fig. 2 und 3 mit etwas weniger Material 9 für das Angußstück 13 aus. Auch in der Ringfläche 12 ist weniger Material 9 vorhanden.

Ein zwischen 40 % und weniger als 100 % liegender Teil der Ringfläche 12 besteht aus demselben eingespritzten Material 9, das Polyamid aufweist, wobei dieser Teil in gleichmäßigen Abständen in Umfangsrichtung der Ringfläche 12 am oberen Ende des Rohrstutzens nach Fig. 8 verteilt ist.

Die in den Fig. 6 und 7 dargestellte Abwandlung der Angußstücke nach den Fig. 4 und 5 zeigt, daß das Angußstück 17 zwar ebenfalls eine gezahnte Scheibe 18 aufweist, deren Zähne 19 und Lücken 20 am radial äußeren Ende ebenso breit wie die Zähne 15 und Lücken 16 des Angußstücks 14 nach den Fig. 4 und 5 sind, deren Lücken 20 jedoch radial tiefer sind. In diesem Falle ergibt sich dennoch die gleiche in Fig. 8 punktiert dargestellte Wellenlinie als Begrenzungslinie 21 des inneren Materials 9 wie bei dem Angußstück 13 nach den Fig. 4 und 5. Desgleichen verbleiben nach dem Abschneiden des Angußstücks 17 vom Rohrstutzen gemäß Fig. 8 die gleichen Ringflächen-Abschnitte aus den Materialien 6 und 9 am freien Ende des Endabschnitts 7, wie bei der Abwandlung des Angußstücks 13 nach den Fig. 4 und 5. Dagegen ist aufgrund der tieferen Lücken 20 zwischen den Zähnen 19 weniger kostspieliges Material 9 (Polyamid) für das Angußstück 17 als für das Angußstück 13 erforderlich. Entsprechend geringer ist der durch das jeweilige Angußstück verursachte Abfall des wertvolleren Materials 9, das überwiegend Polyamid aufweist.

Durch Änderung des Verhältnisses der Breite der Zähne 15 bzw. 19 zur Breite der zwischen ihnen liegenden Lükken 16 bzw. 20, kann ferner die Strömungsgeschwindigkeit des pro Hub eines das Material 9 aus dem Angußwerkzeug herausdrückenden Kolbens und damit die axiale Eindringtiefe des Materials 9 in die noch plastische Seele des Materials 6 bestimmt werden.

Die Eindringtiefe wird auch durch das Verhältnis der Mengen oder Volumina der Materialien 6 und 9 bestimmt: Je größer die Menge des Materials 9 im Verhältnis zu der des Materials 6 ist, um so größer ist die Eindringtiefe und umgekehrt. Außerdem ist in der Kavität des Formwerkzeugs hinreichend Ausweichraum für die durch das Material 9 verdrängte Menge des äußeren Materials 6 freigehalten. Auch die Anzahl der Zähne 15 bzw. 19 und ihre Breite bestimmt einerseits die Breite der Ringflächen-Abschnitte aus dem Material 9 im Verhältnis zur gesamten Ringfläche 12 und damit ebenfalls das Volumenverhältnis der Materialien 6 und 9 im Endabschnitt 7 und die axiale Eindringtiefe des Materials 9 im Material 6, um nur so viel des kostspieligen Materials 9 zu verwenden, wie es erforderlich ist, beispielsweise um die Gesamtkriechfestigkeit gegen den durch die spannbare Schelle beim Festklemmen des Schlauches auf dem Endabschnitt 7 ausgeübten Druck zu erhöhen. Auch andere Gesamteigenschaften des Endabschnitts 7 lassen sich durch die Wahl des Volumen- oder Mengenverhältnisses der Materialien 6 und 9 festlegen, beispielsweise die Diffusionssperrfähigkeit oder Impermeabilität gegenüber Kohlenwasserstoffen.

Desgleichen lassen sich die Gesamteigenschaften des Rohrstutzens örtlich entsprechend der Wahl der erwähnten Volumen- oder Mengenverhältnisse und in Abhängigkeit von der Wahl der Lage der Ringfläche 12 und der Ausbildung des Angußwerkzeugs und Angußstücks vorherbestimmen.

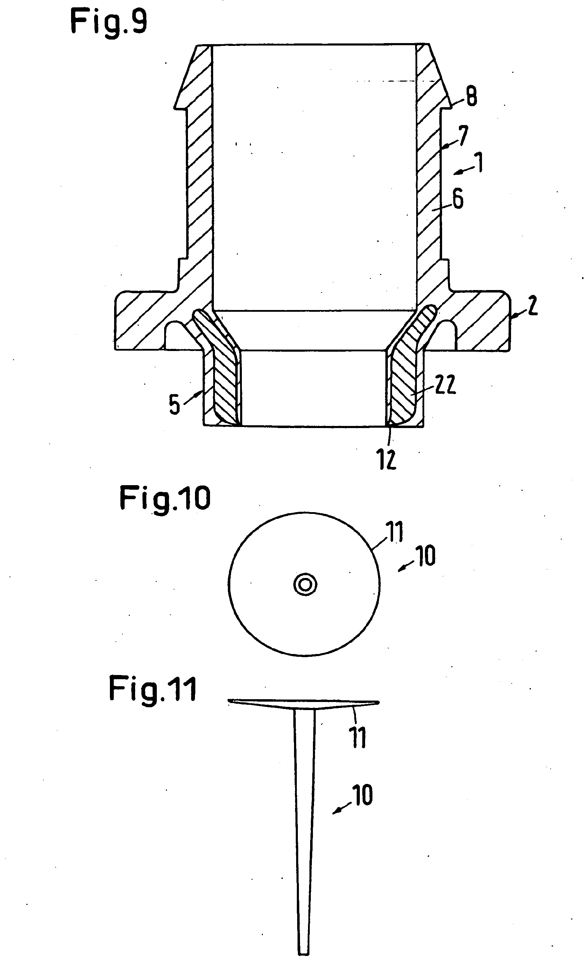

So ist bei dem nicht unter den Schutzbereich von Anspruch 1 fallenden Ausführungsbeispiel des ebenfalls als Rohrstutzen ausgebildeten Bauteils nach Fig. 9 ein Kunststoff aufweisendes Material 22 nur in dem unteren Endabschnitt 5 über die endseitige Ringfläche 12 am unteren Ende des Rohrstutzens eingespritzt worden, und zwar mittels eines Angußwerkzeugs, bei dem sich ein ähnliches Angußstück gemäß Fig. 10 und 11 wie das in den Fig. 2 und 3 dargestellte ergibt, nur daß der Durchmesser der Scheibe 11 bei dem Angußstück 10 nach den Fig. 10 und 11 entsprechend dem Innendurchmesser des Endabschnitts 5 kleiner als der des in den Fig. 2 und 3 dargestellten Angußstücks 10 ist. Der Kunststoff des Materials 22 ist dagegen ein Elastomer, um zwischen den Endabschnitten 7 und 5 eine erwünschte höhere, relative elastische Biegsamkeit zu erzielen. Wenn das durch den rohrförmigen Abschnitt 1 zu leitende Fluid keinen Kohlenwasserstoff aufweist, braucht in den Endabschnitt 7 kein Material 9 mit höherer Diffusionssperrfähigkeit eingespritzt zu sein. Desgleichen braucht der Endabschnitt 7 keine höhere Kriechfestigkeit als das Material 6 aufzuweisen, wenn lediglich eine Fluidleitung aus einem Kunststoff auf den Endabschnitt 7 aufgeschoben werden soll, der sich selbst auf dem Endabschnitt 7 festhält.

Statt der endseitig kontinuierlich umlaufenden Ringfläche 12 kann auch eine Ringfläche 12 gemäß Fig. 8 am unteren Ende des Rohrstücks vorgesehen sein, bei der das eingespritzte Material, hier das Material 22, in gleichmäßigen Abständen über die endseitige Ringfläche verteilt ist, wobei das eingespritzte Material 22 ebenfalls mindestens 40 % der gesamten, aus den beiden Materialien 6 und 22 bestehenden Ringfläche 12 beträgt.

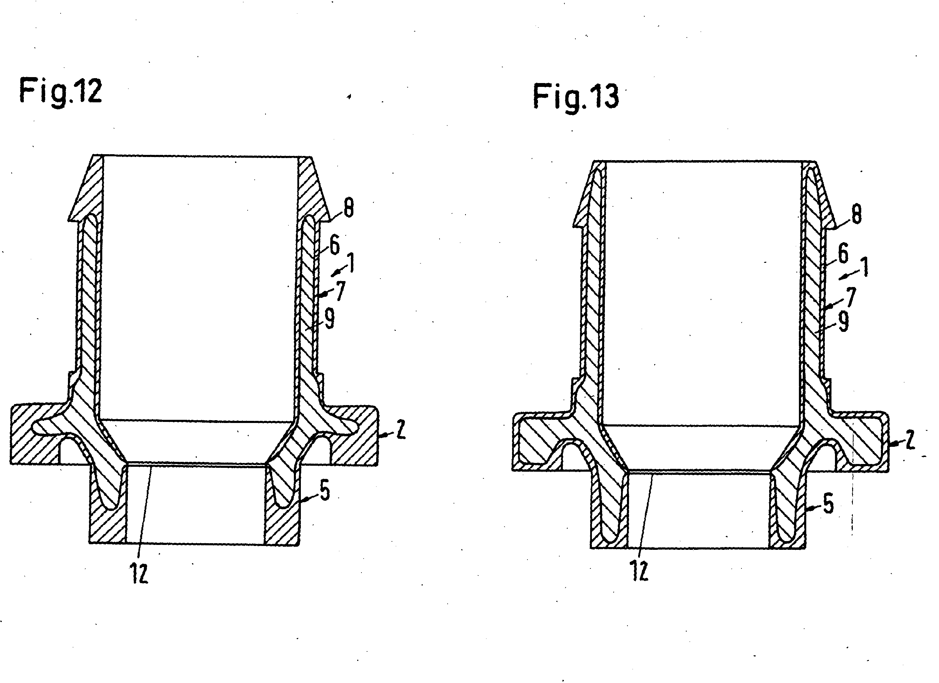

Bei dem nicht unter den Schutzbereich von Anspruch 1 fallenden Ausführungsbeispiel nach Fig. 12 ist wiederum dasselbe Material 9, wie es bei den Ausführungsbeispielen nach den Fig. 1 und 8 verwendet worden ist, nämlich Polyamid mit Glasfaserverstärkung, in den Abschnitt 1, d.h. in beide Endabschnitte 5 und 7 und zusätzlich in den Flansch 2 eingespritzt worden. Die Ringfläche 12 liegt hier innerhalb des Endabschnitts 5, zu deren Ausbildung wiederum ein Einspritzwerkzeug verwendet wurde, bei dem sich das in den Fig. 10 und 11 dargestellte Angußstück 10 ergibt. Das Material 9 erstreckt sich bis in beide Endabschnitte 5 und 7 und den Flansch 2, um einerseits beide Endabschnitte 5 und 7 und den Flansch 2 weitgehend impermeabel gegenüber Kohlenwasserstoffen und andererseits den Endabschnitt 7 in dem am stärksten druckbelasteten Teil des Endabschnitts 7 möglichst kriechfest auszubilden.

Das nicht unter den Schutzbereich von Anspruch 1 fallenden Ausführungsbeispiel nach Fig. 13 entspricht weitgehend dem nach Fig. 12, nur daß das Material 9 aus glasfaserverstärktem Polyamid noch weiter in die Endabschnitte 5 und 6 sowie den Flansch 2 eingespritzt worden ist.

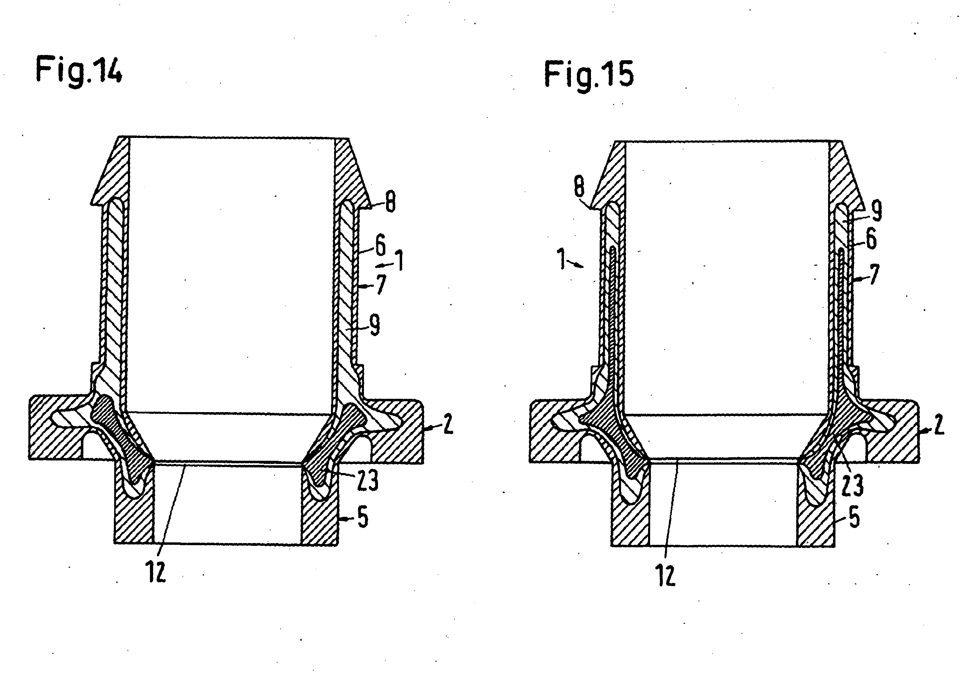

Das nicht unter den Schutzbereich von Anspruch 1 fallenden Ausführungsbeispiel nach Fig. 14 unterscheidet sich von dem nach Fig. 12 nur dadurch, daß noch ein drittes Material 23 aus Kunststoff in das Material 9 über die Ringfläche 12 in den Übergangsbereich zwischen den Endabschnitten 5 und 7 eingespritzt worden ist. Das Material 23 enthält den gleichen Kunststoff wie das Material 6, d.h. Polyethylen (PE). Das Polyethylen bedeckt dann das glasfaserverstärkte Material 9 auf seiner gesamten Oberfläche. Dadurch wird erreicht, daß die Glasfasern des Materials 9 auch nicht auf der Ringfläche 12 durch kohlenwasserstoffhaltige Fluide, wie Benzin oder Öl, die durch den Rohrstutzen strömen, ausgewaschen werden können. Alternativ kann das Material 23 auch ein Elastomer sein, wenn der Übergangsbereich zwischen den Endabschnitten 5 und 7 möglichst biegsam sein soll. Gleichzeitig wird ein Teil des im Material 9 enthaltenen kostspieligeren Polyamids eingespart.

Das nicht unter den Schutzbereich von Anspruch 1 fallenden Ausführungsbeispiel nach Fig. 15 unterscheidet sich von dem nach Fig. 14 nur dadurch, daß das Material 23 sich weiter bis in den Endabschnitt 7 und etwas weiter in den Flansch 2 erstreckt, um bei Verwendung eines Elastomers als Material 23 auch die Biegsamkeit des Endabschnitts 7 zu erhöhen und noch etwas mehr an kostspieligem, im Material 9 enthaltenen Polyamid einzusparen.

Anstelle des erwähnten Materials PE und des glasfaserverstärkten PA kann das innere bzw. eingebettete Material aus der Gruppe ausgewählt sein, die PE, PP, verstärktes PP, PBT, PET, EVOH, PBN, PEN, POM, PPS und Fluorthermoplast aufweist. Das äußere Material 6 kann alternativ aus der Gruppe ausgewählt sein, die Polyolefin, thermoplastisches Elastomer, unverstärktes PA, thermoplastisches Polyester und thermoplastisches Polyesterelastomer aufweist.

## Patentansprüche

1. Bauteil mit rohrförmigem Abschnitt (1), insbesondere Fluidleitungs-Bauteil, das wenigstens zwei Materialien mit unterschiedlicher Steifigkeit und/oder Kriechfestigkeit aufweist, wobei die Materialien thermoplastische Kunststoffe (6, 9, 22, 23) aufweisen und das steifere und/oder kriechfestere Material (9) in dem anderen Material (6) eingebettet ist, wobei der rohrförmige Abschnitt (1) eine koaxial zur Längsmittelasche des Bauteils umlaufende Ringfläche (12) aufweist, über die das steifere und/oder kriechfestere Material (9) eingespritzt worden ist, **dadurch gekennzeichnet, daß** ein zwischen 40 % und weniger als 100 % liegender Teil der Ringfläche (12) aus dem eingespritzten Material besteht und in gleichmäßigen Abständen in Umfangsrichtung der Ringfläche (12) verteilt ist.

2. Bauteil nach Anspruch 1, **dadurch gekennzeichnet, daß** die Ringfläche (12) durch in den inneren Kunststoff (9) über die Ringfläche (12) nachgespritzten Kunststoff (23), der dem äußeren Kunststoff (6) gleicht, abgedeckt ist.

3. Bauteil nach Anspruch 1 oder 2, **dadurch gekennzeichnet, daß** das Mengenverhältnis des eingebetteten Materials (9; 22; 23) zum äußeren Material (6) im Bereich von 10 % bis 90 % liegt.

4. Bauteil nach einem der Ansprüche 1 bis 3, **dadurch gekennzeichnet, daß** das eingebettete Material (9; 22; 23) aus der Gruppe ausgewählt ist, die Polyamid (PA), verstärktes Polyamid, Polyethylen (PE), verstärktes Polyethylen, Polypropylen (PP), verstärktes Polypropylen, Polyethylenterephthalat (PET), Ethylenvinylalkohol (EVOH), Polybutylennaphthalat (PBN), Polyethylennaphthalat (PEN), Polyoximethylen (POM), Polyphenylensulfid (PPS) und Fluorthermoplast aufweist.

5. Bauteil nach einem der Ansprüche 1 bis 4, **dadurch gekennzeichnet, daß** das äußere Material aus der Gruppe ausgewählt ist, die Polyolefin, thermoplastisches Elastomer, unverstärktes Polyamid, thermoplastisches Polyester und thermoplastisches Polyesterelastomer aufweist.

## Claims

1. Part with tubular section (1), particularly a fluid line structural component, comprising at least two materials having different stiffness and/or creeping strength, whereas the materials comprise thermoplastic synthetic materials (6,9,22,23) and the material (9) having a greater stiffness and/or creeping strength is embedded in the other material (6), whereas the tubular section (1) comprises an annular surface (12) revolving coaxially to the longitudinal center axis of the structural component across which the material having a greater stiffness and/or creeping strength has been injected, **characterized in that** a between 40% and less than 100% located part of the annular surface (12) is composed of the injected material and is distributed in uniform spacings in circumferential direction of the annular surface (12).

2. Part according to claim 1, **characterized in that** the annular surface (12) is covered by a synthetic material (23) injected subsequently into the inner synthetic material (9) over the annular surface (12) which equals the outer synthetic material (6).

3. Part according to claim 1 or 2, **characterized in that** the quantity ratio of the embedded material (9; 22; 23) to the outer material (6) is in the range of 10% to 90%.

4. Part according to one of the claims 1 to 3, **characterized in that** the embedded material (9;22;23) is selected from the group, which comprises polyamide (PA), reinforced polyamide, polyethylene (PE), reinforced polyethylene, polypropylene (PP), reinforced polypropylene, polyethylene terephthalate (PET), ethylene vinyl alcohol (EVOH), polybutylene naphthalate (PBN), polyethylene naphthalate (PEN), polyoximethylene (POM), polyphenylene sulfide (PPS), and fluorothermoplastic material.

5. Part according to one of the claims 1 to 4, **characterized in that** the outer material is selected from the group, which comprises polyolefin, thermoplastic elastomer, non-reinforced polyamide, thermoplastic polyester, and thermoplastic polyester elastomer.

## Revendications

1. Pièce avec section tubulaire (1), en particulier pièce de conduite fluidique, qui présente au moins deux matériaux à la rigidité et/ou à la résistance au fluage différente, les matériaux présentant des matières thermoplastiques (6, 9, 22, 23) et le matériau (9) le plus rigide et/ou le plus résistant au fluage étant enrobé dans l'autre matériau (6), la section tubulaire (1) présentant une surface annulaire (12) périphérique coaxialement à l'axe médian longitudinal de la pièce, sur laquelle le matériau (9) le plus rigide et/ou le plus résistant au fluage a été injecté, **caractérisée en ce qu'**une partie de la surface annulaire (12) comprise entre 40 % et moins de 100 % se compose de matériau injecté et est répartie à intervalles réguliers dans le sens périphérique de la surface annulaire (12).

2. Pièce selon la revendication 1, **caractérisée en ce que** la surface annulaire (12) est recouverte par de la matière plastique (23) injectée ultérieurement dans la matière plastique (9) intérieure sur la surface annulaire (12), laquelle ressemble à la matière plastique (6) extérieure.

3. Pièce selon la revendication 1 ou 2, **caractérisée en ce que** le rapport des quantités du matériau (9 ; 22 ; 23) enrobé par rapport au matériau extérieur (6) est compris dans la plage entre 10 % et 90 %.

4. Pièce selon l'une quelconque des revendications 1 à 3, **caractérisée en ce que** le matériau (9 ; 22 ; 23) enrobé est sélectionné dans le groupe qui présente du polyamide (PA), du polyamide renforcé, du polyéthylène (PE), du polyéthylène renforcé, du polypropylène (PP), du polypropylène renforcé, du polytéréphtalate d'éthylène (PET), de l'alcool vinylique d'éthylène (EVOH), du polybutènenaphtalate (PBN), du polyéthylènenaphtalate (PEN), du polyoxyméthylène (POM), du polysulfure de phénylène (PPS) et du thermoplastique fluoré.

5. Pièce selon l'une quelconque des revendications 1 à 4, **caractérisée en ce que** le matériau extérieur est sélectionné dans le groupe qui présente de la polyoléfine, de l'élastomère thermoplastique, du polyamide non renforcé, du polyester thermoplastique et de l'élastomère thermoplastique polyester.
